(19) Europäisches Patentamt / European Patent Office / Office européen des brevets

(11) **EP 3 183 061 B1**

(12) **EUROPEAN PATENT SPECIFICATION**

(45) Date of publication and mention of the grant of the patent:
**05.12.2018 Bulletin 2018/49**

(21) Application number: **15756773.6**

(22) Date of filing: **20.08.2015**

(51) Int Cl.:
**B01L 3/02** *(2006.01)*

(86) International application number:
**PCT/US2015/046081**

(87) International publication number:
**WO 2016/028998 (25.02.2016 Gazette 2016/08)**

(54) **PIPETTE TIPS WITH ENHANCED ATTRIBUTES AND METHODS FOR MANUFACTURING**

PIPETTENSPITZEN MIT ERWEITERTEN ATTRIBUTEN UND VERFAHREN ZUR HERSTELLUNG DAVON

EMBOUTS DE PIPETTE AYANT DES ATTRIBUTS AMÉLIORÉS ET PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2014 US 201462039491 P**

(43) Date of publication of application:
**28.06.2017 Bulletin 2017/26**

(73) Proprietor: **Corning Incorporated
Corning, New York 14831 (US)**

(72) Inventors:
• **CADOTTE, JR John Claude
  Waterboro, Maine 04087 (US)**
• **KEENAN, Michael Patrick
  Londonderry, New Hampshire 03053 (US)**
• **KENNEY, David Alan
  Greenville, NH 03048 (US)**
• **RAMMOHAN, Aravind Raghavan
  Big Flats, New York 14814 (US)**
• **WALL, Joseph Christopher
  Southborough, MA 01772 (US)**
• **WANG, Jin
  Ithaca, New York 14850 (US)**

(74) Representative: **Scheuermann, Erik
Elkington and Fife LLP
Prospect House
8 Pembroke Road
Sevenoaks, Kent TN13 1XR (GB)**

(56) References cited:
**WO-A1-2013/170538    GB-A- 2 172 218
US-A1- 2011 183 433**

## Description

### BACKGROUND

*Field*

The present disclosure relates generally to disposable pipette tips and methods for making such pipette tips, and particularly to pipette tips having enhanced attributes and improved manufacturability.

*Technical Background*

Manipulation of biological and/or chemical molecules in solution has become an essential aspect of various kinds of analysis. In biomedical or pharmaceutical assays, for example, cellular components, proteins or nucleic acid (DNA) molecules are studied to ascertain particular genetic risk factors for disease or the efficacy of drug trials. Pipettes are commonly used as a vehicle for such manipulations.

Disposable pipette tips were introduced to help laboratories avoid cross-contamination that is associated with reusing pipettes. Such pipette tips are typically made from polypropylene via injection molding. Disposable pipette tips are attached to the distal end of mechanical aspirators, i.e., the mandrel shaft of a pipettor, and are designed to fit on the end of the mechanical aspirator so that the sole air path from the mechanical aspirator is out through the distal end of the pipette tip. Prior to the distal end being inserted into a fluid to be aspirated from a source container, the mechanical aspirator typically uses a plunger to advance air through the aspirator and out the pipette tip's distal end. After the distal end is placed in the fluid, the plunger on the mechanical aspirator is released to introduce a relative vacuum into the pipette tip and thereby draw fluid from the source container into the pipette tip. The aspirated fluid contained in the pipette tip can then be dispensed into a target container using the plunger. Recently, robotic aspirating instruments have come to replace manual mechanical aspirators, especially in high throughput and labor intensive environments.

It would be advantageous to have a methodology to design and manufacture disposable pipette tips and particularly to design economical pipette tips having attributes compatible with existing infrastructure and suitable for use with both manual and robotic handlers.

GB 2 172 218 A relates to a pipetter tip comprising a nozzle, for fitment to one end of a pipetter, having a generally conical internal bore, the bore having three differently tapered sections with a small inwardly extending step between each section.

US 2011/183,433 A1 relates to pipette tips useful for acquiring or dispelling liquids.

WO 2013/170538 A1 relates to a pipette tip member for releasably mating with a pipette shaft and transferring liquid.

### BRIEF SUMMARY

Disclosed are methods for generating pipette tip designs where the pipette tips exhibit one or more enhanced attributes, as well as pipette tips having such attributes. In embodiments, these enhanced attributes include a thinned profile to reduce the amount of resin used to form the pipette tip. In embodiments, the distal end of the pipette tip is thinned in a way that allows the tip to maintain rigidity necessary to use the pipette tip without causing it to bend. In embodiments, the pipette tip is thinned so that the ratio of the weight of the proximal end of the pipette tip to the distal end of the pipette tip, compared to the overall weight of the pipette tip, creates a tip that is reduced in weight in the distal portion of the pipette tip.

In embodiments, the pipette tip includes a proximal end having an aperture and a proximal body region having a first internal cavity that receives a pipette member; and a distal end having an aperture and a distal body region having a second internal cavity that in operation receives and discharges a liquid aspirated by the pipette member. The proximal body region is juxtaposed to the distal body region, and the respective proximal first and distal second internal cavities are in gas-liquid communication, wherein the pipette tip has a wall thickness of less than 0.559 mm (0.022 inches) over the distal body region. A method of making a pipette tip comprises injecting a suitable polymer into a single or multiple cavity mold.

Additional features and advantages of the subject matter of the present disclosure will be set forth in the detailed description which follows, and in part will be readily apparent to those skilled in the art from that description or recognized by practicing the subject matter of the present disclosure as described herein, including the detailed description which follows, the claims, as well as the appended drawings.

It is to be understood that both the foregoing general description and the following detailed description present embodiments of the subject matter of the present disclosure, and are intended to provide an overview or framework for understanding the nature and character of the subject matter of the present disclosure as it is claimed. The accompanying drawings are included to provide a further understanding of the subject matter of the present disclosure, and are incorporated into and constitute a part of this specification. The drawings illustrate various embodiments of the subject matter of the present disclosure and together with the description serve to explain the principles and operations of the subject matter of the present disclosure. Additionally, the drawings and descriptions are meant to be merely illustrative, and are not intended to limit the scope of the claims in any manner.

**BRIEF DESCRIPTION OF THE DRAWINGS**

The following detailed description of specific embodiments of the present disclosure can be best understood when read in conjunction with the following drawings, where like structure is indicated with like reference numerals and in which:

**Fig. 1** is a perspective view of a pipette tip according to various embodiments;
**Fig. 2** is a cross-sectional view of the pipette tip shown in **Fig. 1**;
**Fig. 3** is (A) an optical micrograph of an example pipette tip; (B) a modeled image of a prior art pipette tip (A Prior Art); (C) a modeled image of a redesigned pipette tip according to one embodiment; and (D) a modeled image of a redesigned pipette tip according to a further embodiment;
**Fig. 4** is a schematic perspective view of an experimental pipette tip highlighting select design changes relative to a Prior Art pipette tip (A (Prior Art);
**Fig. 5** is a top-down view of a pipette tip, taken from the proximal end of the pipette tip;
**Fig. 6** is a schematic lateral view of (A, D) experimental thin-walled pipette tips, and (B, C) prior art pipette tips;
**Fig. 7** is an engineering drawing showing a lateral view of an embodiment of the experimental thin-walled pipette tip.
**Fig. 8** is an engineering drawings showing a cross-sectional view of an embodiment of the experimental thin-walled pipette tip, taken at line A-A of **Fig. 7**;
**Fig. 9** is an engineering drawing showing an expanded view of an embodiment of the experimental thin-walled pipette tip, shown in the circle of **Fig. 8**;
**Figs. 10** is an engineering drawing showing a cross-sectional axial view of an embodiment of the experimental thin-walled pipette tip of **Fig. 7**;
**Fig. 11** is a graph showing post-molding, through-thickness shrinkage variation in each of an embodiment of the experimental thin-walled pipette tip and a prior art pipette tip;
**Fig. 12** is a graph showing crystallite size in an embodiment of an experimental thin-walled pipette tip and a prior art pipette tip;
**Fig. 13** is an optical micrograph of an embodiment of an experimental thin-walled pipette tip and a prior art pipette tip;
**Fig. 14** shows SEM micrographs of the interior surface of an embodiment of an experimental thin-walled pipette tip and a prior art pipette tip;
**Fig. 15** is a perspective view of an experimental thin-walled pipette tip according to further embodiments;
**Fig. 16** is a perspective view of an experimental thin-walled pipette tip according to further embodiments;
**Fig. 17** is a perspective view of a ribbed thin-walled pipette tip according to further embodiments;
**Fig. 18** is a perspective view of an experimental ribbed thin-walled pipette tip according to further embodiments;
**Fig. 19** is an engineering drawing showing a lateral view of an embodiment of an experimental thin-walled pipette tip of Fig. 16;
**Fig. 20** is an engineering drawing showing a cross-sectional view of the experimental pipette tip of Fig. 16;
**Fig. 21** is an engineering drawing showing a cross-sectional view of the experimental pipette tip of Fig. 16;
**Fig. 22** is an engineering drawing showing a cross-sectional view of the experimental pipette tip of Fig. 16 according to embodiments;
**Fig. 23** is an engineering drawing showing a lateral view of the ribbed thin-walled pipette tip of Fig. 17;
**Fig. 24** is an engineering drawing showing a cross-sectional view of the experimental pipette tip of Fig. 17;
**Fig. 25** is an engineering drawing showing an axial view of the experimental pipette tip of Fig. 17;
**Fig. 26** is an engineering drawing showing a magnified cross-sectional view of the experimental pipette tip of Fig. 27;
**Fig. 27** is a schematic illustration of a hot runner system for manufacturing thin-walled pipette tips, according to embodiments of the invention;
**Fig. 28** is a graph illustrating the proximal half-tip weight of an experimental embodiment compared to prior art pipette tips.
**Fig. 29** is a graph illustrating the distal half-tip weight of experimental embodiment compared to prior art pipette tips.
**Fig. 30** is a graph illustrating the Thinning Constant T plotted against total weight (Wt) for an experimental embodiment compared to prior art pipette tips.
**Fig. 31** is a measurement of changes in mass, indicating the resistance to, and retention of water on an experimental and a prior art tip.

## DETAILED DESCRIPTION

Reference will now be made in greater detail to various embodiments of the subject matter of the present disclosure, some embodiments of which are illustrated in the accompanying drawings. The same reference numerals will be used throughout the drawings to refer to the same or similar parts.

Embodiments relate to an integrated computational approach to generate and assess new pipette tip designs. Particularly attractive are economical pipette tip designs, such as designs that utilize less raw material. The approach involves: (i) generating a new pipette design, (ii) evaluating the moldability of the design (e.g., injection pressure, core shift), (iii) evaluating the structural reliability of the design (e.g., bending, mandrel insertion, filter insertion), (iv) optimizing manufacturing process settings (e.g., warp, deflection, straightness as well as choice of resin), and (v) evaluating compatibility with after-mold processes. The design generation and evaluations may be performed using a mathematical model, which minimizes the risks of going to production with unsuitable or inefficient new designs.

The manufacture (e.g., injection molding) of pipette tips comprising less raw material, i.e., thin walls, poses a number of challenges. In the molding process, a thin mold cavity is more difficult to fill than a thick counterpart. Notably, due to the pressure drop being inversely proportional to the square of the wall thickness, injection into a thin mold cavity requires a high injection pressure. Pipette tip designs having thin walls should be injection moldable within machine capacity. In addition, the molded part should be free of visual defects and core deflection should be small. Injection molding simulation using Autodesk Simulation Moldflow Insight software is conducted to evaluate the moldability of thin designs.

In addition to the manufacturing challenges associated with a thin walled design, a thin part is typically less stiff and more flexible than a thick part. When mounted onto a robotic system, pipette tips should sustain the abrupt insertion of a mandrel shaft and then tightly grip onto it. During liquid transportation, pipette tips should withhold the liquid and not wobble. In embodiments where the pipette tip is fitted with an internal filter, the filter insertion should not cause deformation or damage to the tip. Structural analysis models account for all three normal operations, and were used to evaluate the reliability of thin walled designs as disclosed herein.

In addition to the foregoing, injection molded parts tend to shrink and warp as a result of the molding process. The generation of residual stresses during molding and the post-molding relaxation of such stresses due to thermal cycling may introduce deformation into a finished part. For example, pipette tips are optionally sterilized in an autoclave after molding. Elevated temperatures associated with the sterilization process may relieve internal stresses that result in measureable strain. Also, stress creep may be observed in tips shipped to hotter climates. Several after-molding processes are modeled by the instant computational approach.

In embodiments, the final pipette tip meets one or more quality control specifications including, for example, weight, length, straightness, dimensional accuracy at the mandrel engagement location, roundness of the small orifice, and optical clarity. In embodiments, the improved designs are compatible with existing pipette infrastructure.

In various embodiments, the inner diameter (ID) of the redesigned pipette tip is retained, while the outer diameter (OD) is reduced with respect to conventional designs. This can result in a substantial decrease is material utilization with attendant decreases in part weight and production cost while unexpectedly resulting in a mechanically robust part. Reduction in the outer diameter may be uniform over the length of the pipette tip or nonuniform, i.e., localized.

In embodiments, the circumferential thickness of reinforcing fins located at a proximal end of the pipette tip is decreased to further decrease material utilization. In embodiments, the fin height as measured in the radial direction is unchanged with respect to conventional designs.

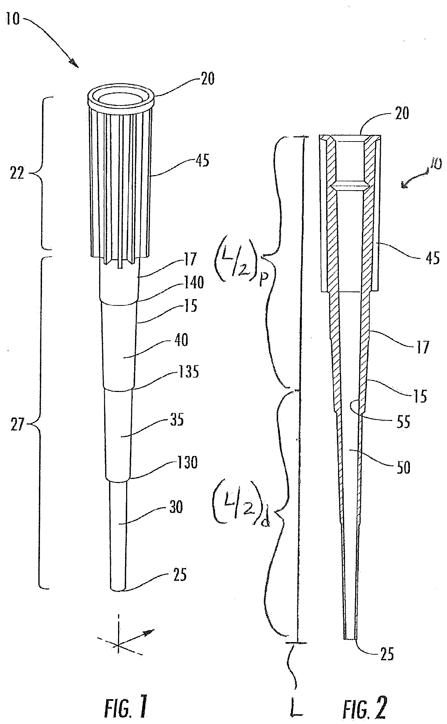

With reference to **Fig. 1,** in embodiments, and experimental disposable pipette tip 10 is illustrated, includes an open cannula **15** having a tapering conical shape defined by a cylindrical outer wall **17.** Cannula **15** includes an open proximal end **20** with a proximal body region **22** (i.e., a "head" or "collar") that receives a pipette member (e.g., pipette mandrel); and an opposing open distal end **25** with a distal body region **27** (i.e., "a liquid tip"). Cannula **15** includes a plurality of optional annular gradations **130, 135** and **140** on outer wall **17** therebetween. Cannula **15** also optionally includes a plurality of fins **45** projecting from outer wall **17** and extending longitudinally from proximal end **20** towards distal end **25.** Fins **45** or radial fins **45** are provided to support the disposable pipette tip **10,** such as when attaching pipette tip **10** to an aspirating instrument.

Optional gradations **130, 135** and **140** may be present to divide cannula **15** into sections **30, 35** and **40** with each gradation **130, 135** and **140** representing a predetermined volume of liquid that may be located between the respective gradation and distal end **25** within cannula **15.** These gradations may be used by laboratory workers when visually measuring the volume of aspirated liquid during a manual pipetting operation. The total volume of liquid that can be held in this usable portion of pipette tip **10** may range from about 0.5 $\mu$L to 250 mL, e.g., 0.5, 1, 5, 10, 50, 100, 250, 500, 1000, 2000, 5000, 10000, 20000, 50000, 100000 or 250000 $\mu$L. Of course, the above-noted volumes are merely exemplary; the present disclosure will also work and be very beneficial for pipette tips having larger and smaller volumes with or without gradations.

**Fig. 2** is a cross-sectional view of an embodiment of an experimental pipette tip **10,** shown in **Fig. 1** and shows a passageway **50** with a generally tapering conical shape extending from proximal end **20** to distal end **25**. As shown in **Fig. 2,** passageway **50** is defined by an interior wall **55** having a diameter. The pipette wall may have a constant thickness or, as illustrated, a variable thickness that decreases (e.g., monotonically) from proximal end **20** to distal end **25**. Fig. 2 also illustrates that the pipette tip has a length L. Length L can be divided into a proximal half (L/2)p and a distal half (L/2)d.

During use, pipette tip **10** is attached to the distal end of an aspirating instrument and held in place by friction. When transferring a liquid reagent or sample from a source container to a target container, the distal end of the aspirating instrument with pipette tip **10** thereon is lowered into the fluid to be aspirated. As the disposable pipette tip is lowered into the fluid, the aspirating instrument generates an air flow through pipette tip **10**. In embodiments, the air flow is monitored by a controller to detect a change in air flow when distal end **25** of pipette tip **10** enters the fluid. When a decrease in air flow is sensed, the aspirating instrument can determine that pipette tip **10** has entered the fluid and can begin an aspiration process, wherein a vacuum is applied to proximal end **20** to aspirate fluid through distal end **25** of pipette tip **10** and into passageway **50**. The vacuum is applied until a predetermined volume of fluid has been aspirated into passageway **50**. The aspirating instrument then extracts pipette tip **10** from the fluid source and moves pipette tip **10** to the target container to dispense the aspirated fluid.

When the aspirating instrument has positioned pipette tip **10** over the target container, air pressure is applied to proximal end **20** to dispense a volume of fluid in passageway **50** into the target container. After dispensing the fluid into the target container, the aspirating instrument ejects pipette tip **10** from its distal end into a disposal container.

An example method of using the pipette tip comprises inserting a pipettor mandrel shaft into the first internal cavity to form a liquid-air seal between the pipette tip and the shaft, receiving a liquid into the second internal cavity and thereafter dispensing the liquid out of the second internal cavity, and separating the pipette tip from the pipettor mandrel shaft.

The following examples are illustrative of various embodiments, and include the disclosure of pipette tip designs having one or more enhanced attributes.

*Examples*

Predictive modeling was used to generate improved designs with favorable attributes. Experimental embodiments were generated, designated as BT-250 or BT-250 (thin) (Version 1 and Version 2) in a 250 $\mu$l pipette tip embodiment, and ZT200 or ZT200 (Thin) in a 200 $\mu$l pipette tip embodiment. Existing 250 $\mu$l pipette tips and 200 $\mu$l pipette tips were used as benchmarks, as shown in **Table 1.**

**Table 1**

| | Description |
| --- | --- |
| BT-250 or BT-250 (thin) | Experimental 250 $\mu$l tip |
| ZT-200 or ZT-200 (thin) | Experimental 200 $\mu$l tip |
| A (Prior Art) | 250 $\mu$l tip available from Axygen, Inc., Union City, CA. |
| A200 (Prior Art) | 200 $\mu$l tip available from Axygen, Inc., Union City, CA. |
| B (Prior Art) | 250 $\mu$l tip available from Beckman Coulter, Brea, CA |
| M (Prior Art) | 250 $\mu$l pipette tip available from Molecular Bio Products available from ThermoFisher, Waltham MA. |

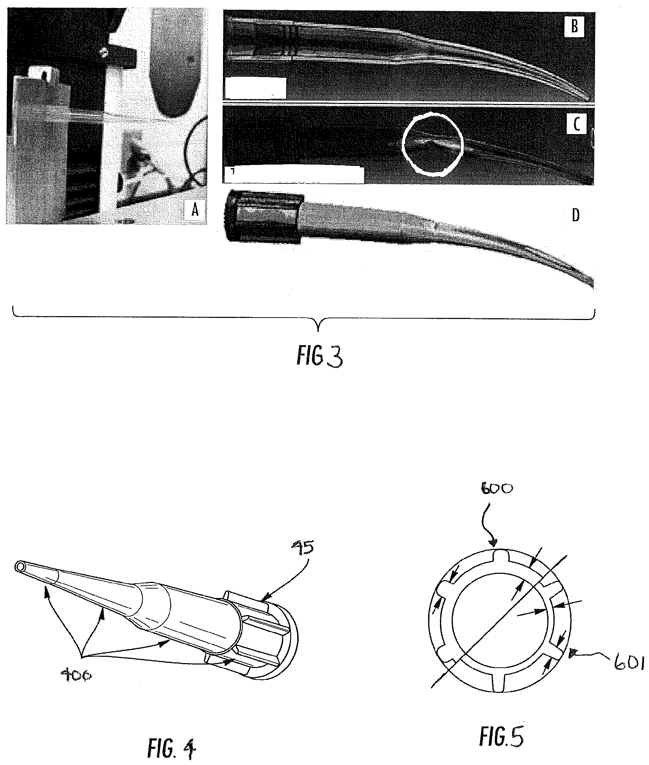

Referring to **Fig. 3,** a design image for a conventional (BT-250) pipette tip (**Fig. 3A** and **3B**) is shown together with one embodiment of an experimental pipette tip (BT-250 thin, Version 1) in **Figs. 3C** and a further embodiment of an experimental pipette tip (BT-250 (Thin), Version 2) **Figs. 3D.** As seen with reference to **Fig. 3C,** removal of too much material from the circled distal region of the experimental pipette tip (BT-250 thin, Version 1) resulted in unacceptable bending or crimping along the tip length. However, as shown in **Fig. 3D,** in the further embodiment of the experimental pipette tip (BT-250 (Thin), Version 2), bending or crimping did not occur upon introduction of the same bending force. For purposes of this disclosure, the experimental pipette tip BT-250 (thin) described throughout is the Version 2 experimental pipette tip. As shown in **Fig. 3D,** resin utilization is decreased by 40% relative to the conventional design, A (Prior Art), shown in **Fig. 3B.** In embodiments, the pipette tips have a total length of from about 44.45 to 61 mm (about 1.75 to 2.4 inches), e.g., about (44.45, 44.70, 44.96, 45.12, 45.47, 45.72, 45.97, 46.23, 46.48, 46.74, 46.99, 47.24, 47.50, 47.75, 48.01, 48.26, 48.51, 48.77, 49.02, 49.28, 49.53, 49.78, 50.04, 50.29, 50.55, 50.80, 51.05, 51.31, 51.56, 51.82, 52.07, 52.32, 52.58, 52.83, 53.09, 53.34, 53.59, 53.85, 54.10, 54.36, 54.61, 54.86, 55.12, 55.37, 55.63, 55.88, 56.13, 56.39, 56.64, 56.90, 57.15, 57.40, 57.66, 57.91, 58.17, 58.42, 58.67, 58.93, 59.18, 59.44, 59.69, 59.94, 60.20, 60.45, 60.71 or 60.96 mm (1.75. 1.76, 1.77, 1.78, 1.79, 1.8, 1.81, 1.82, 1.83, 1.84, 1.85, 1.86, 1.87, 1.88, 1.89, 1.90, 1.91, 1.92, 1.93, 1.94, 1.95, 1.96, 1.97, 1.98, 1.99, 2, 2.01, 2.02, 2.03, 2.04, 2.05, 2.06. 2.07, 2.08, 2.09, 2.01, 2.02, 2.03, 2.04, 2.05, 2.06, 2.07, 2.08. 2.09, 2.1, 2.11, 2.12, 2.13, 2.14, 2.15, 2.16, 2.17, 2.18, 2.19, 2.2, 2.21, 2.23, 2.24, 2.25, 2.26, 2.27, 2.28, 2.29, 2.3, 2.31, 2.32, 2.33, 2.34, 2.35, 2.36, 2.37, 2.38, 2.39 or 2.4 inches), including ranges between any of the foregoing, and comprise a total resin volume of from about 190 to 220 mm$^3$, e.g., about 190, 195, 200, 205, 210, 215 or 220 mm$^3$, including ranges between any of the foregoing. For example, the example tip may be from 44.45 to 57.15 mm (1.75 to 2.25 inches) or from 44.45 to 60.96 mm (1.75 to 2.4 inches).

In embodiments, the BT-250 pipette tip (Version 2, as illustrated in **Fig. 3D)** has a tip straightness differential length of about 0.0127 mm (0.0005 in), in embodiments. The tip straightness differential length (l) is defined as L(1-cosθ), where L is the overall length of the pipette tip and θ is the average angle of tip deflection. Thus, the tip straightness differential length (l) is the difference between the unbent length (L) of the pipette tip and the horizontal projection of the pipette tip length when the tip is bent, i.e., in the absence of an applied load or in response to a constant load (e.g., 0.4 to 2 N) applied to the distal end of the tip in a direction orthogonal to the tip length (L). For an un-deflected (straight) tip, θ =0 and l=0.

In embodiments, pipette tips have a tip displacement of less than 2 mm, e.g., 0.8, 0.9, 1.0, 1.1, 1.2, 1.3, 1.4, 1.5 or 1.6 mm, and a tip straightness differential length between 0 and 1.016 mm (0 and 0.040 inches), e.g., 1.016, 0.508, 0.254, 0.127, 0.051, 0.025, 0.013, 0.005, 0.003, 0.001 or 0 mm ($4 \times 10^{-2}$, $2 \times 10^{-2}$, $1 \times 10^{-2}$, $5 \times 10^{-3}$, $2 \times 10^{-3}$, $1 \times 10^{-3}$, $5 \times 10^{-4}$, $2 \times 10^{-4}$, $1 \times 10^{-4}$, $5 \times 10^{-5}$ or 0 inches), including ranges between any of the foregoing. In further embodiments, pipette tips have a tip displacement for an applied load of 0.4 N of less than 2 mm, e.g., 0.8, 0.9, 1.0, 1.1, 1.2, 1.3, 1.4, 1.5 or 1.6 mm, including ranges between any of the foregoing. In further embodiments, pipette tips have a tip displacement for an applied load of 1 N of less than 4 mm, e.g., 1, 1.5, 2, 2.5, 3, 3.5 or 4 mm, including ranges between any of the foregoing. In further embodiments, pipette tips have a tip displacement for an applied load of 2 N of less than 8 mm, e.g., 4, 5, 6, 7 or 8 mm, including ranges between any of the foregoing.

A tip straightness differential length of 0.0127 mm (0.0005 inches) represents an improvement over conventional pipettes. The BT-250 embodiment has a tip straightness differential length of 0.0356 mm (0.0014 in). The improved tip straightness of the BT-250 thin embodiment minimizes pipette tip-dispenser mismatch and hence enhances ease of use.

In addition to stress-induced deformation (deflection), tips may undergo thermally-induced deformation or deflection due to, for example, thermal expansion during cooling. In embodiments, injection molded tips exhibit a core shift (tip displacement) of less than 0.0254, 0.0025 or 0.0003 mm ($10^{-3}$, $10^{-4}$, or $10^{-5}$ in). Core shift data for example pipette tips is summarized in **Table 6.** Additional beneficial attributes associated with the thin designs as disclosed herein, due at least in part to the decreased resin utilization, include an overall thinner platform, decrease in part shrinkage, and increase in optical clarity compared to conventional pipette tips. The increased optical clarity enhances the visibility of fluid within the pipette tip, and enables the use of additives such as anti-static chemistries that can improve fluid dispensing accuracy, but which may adversely contribute to transparency. In addition, the thinner platform enables the use of a broader array of additives at higher loading levels. Moreover, the thinner platform (decreased resin utilization) is achieved without compromising the mechanical integrity (i.e., tip straightness, tip stiffness, sealability, etc.) of the pipette tip. In one example, a 37% decrease in mandrel load force (from 104.1 to 64.9 N (23.4 lbf to 14.6 lbf)) was realized with the thinner design. For manual pipetting, this reduces operator fatigue. For automated applications, it allows for lower cost mandrel drivers and decreases wear and tear on the components.

Highlighted in **Figs. 4** and **5** are areas where design changes were made in embodiments of the experimental BT-250 pipette with respect to the A (Prior Art) tip, which include decreasing the thickness of the outer wall and decreasing the circumferential thickness of the supporting fins. In embodiments, supporting fins have a circumferential thickness of less than 0.762 mm (0.03 inches), e.g., 0.660 or 0.559 mm (0.026 or 0.022 inches). **Fig. 4** illustrates the outer diameters **400** of the pipette tip, in embodiments. **Fig. 5** is a top-down view of a pipette tip, taken from the proximal end of the pipette tip. **Fig. 5** illustrates the thickness of the experimental pipette tip BT-250 **601** compared to the thickness of a prior art pipette tip, such as A (Prior Art) **600,** in embodiments. The experimental pipette tip BT-250 shows a thinner wall thickness than the A (Prior Art) pipette tip.

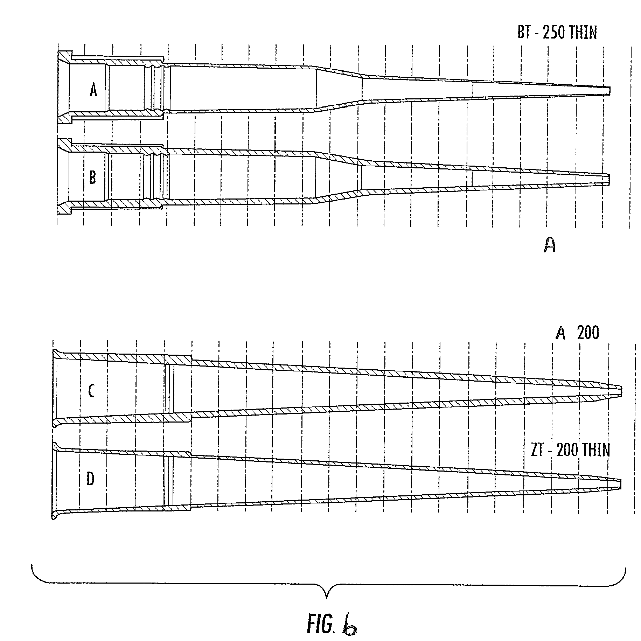

Summarized in **Table 2** are pipette tip dimensions (inner diameter, wall thickness and outer diameter in units of mm with the values in inches in brackets) at discrete locations along the length of the pipette tip (at 2.54 mm (0.1 inch) intervals) from the proximal end to the distal end for each of the BT-250 thin (Version 2) (shown in **Fig. 6A**) and A (Prior Art) tips (shown in **Fig. 6B**). Also illustrated in **Fig. 6** are corresponding cross-sectional drawings for the experimental ZT-200 thin designs (shown in **Fig. 6C**) as disclosed herein and the A200 (Prior Art) tips (shown in **Fig. 6D**). In **Fig. 6,** each 2.54 mm (0.1 inch) interval is delineated with a dashed vertical line.

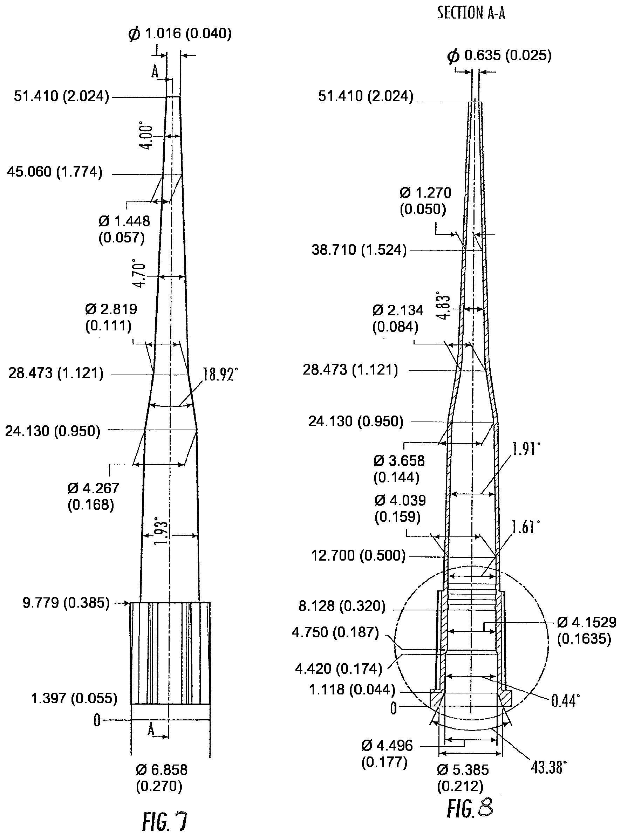

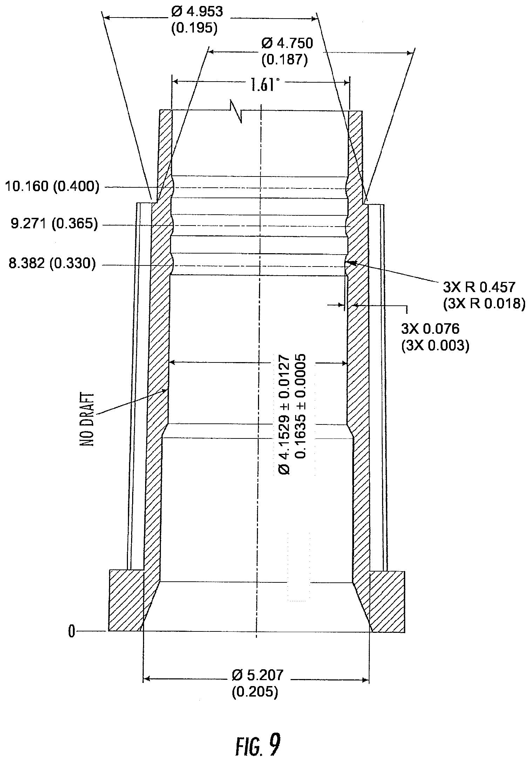

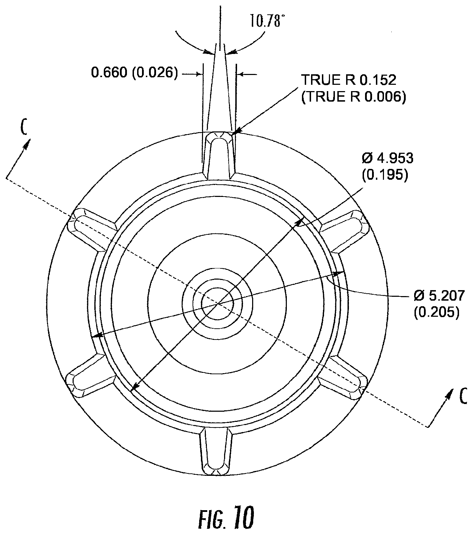

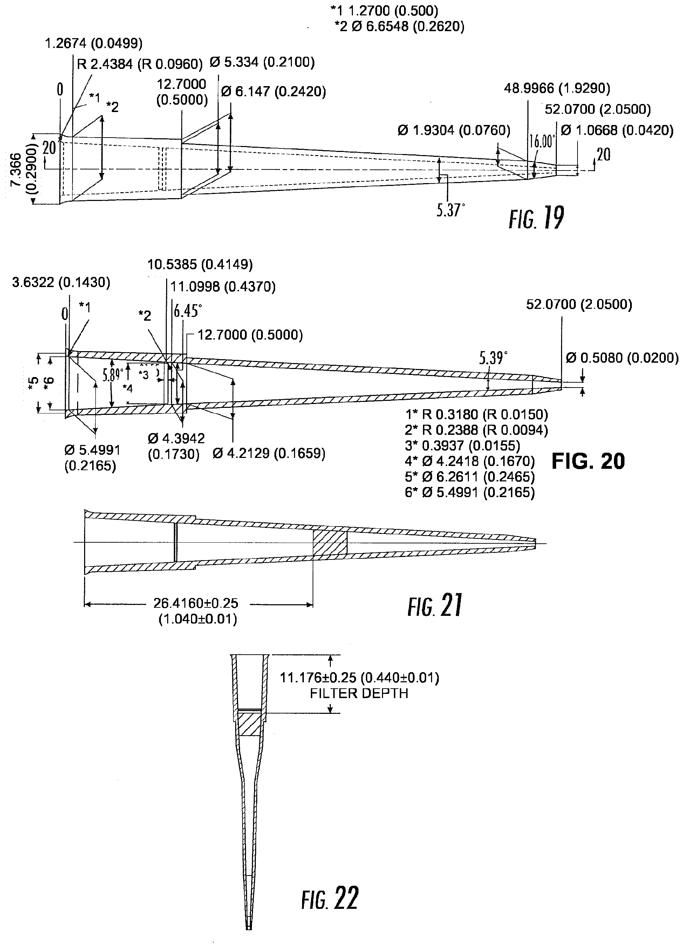

According to embodiments, engineering drawings for the BT-250 thin design (Version 2) are shown in **Figs. 7, 8, 9** and **10.** Engineering drawings for the ZT-200 thin embodiment are shown in **Figs. 19-26.** Length measurements in the engineering drawings are given in in mm with the value in inches given in brackets.

**Table 2.** BT-250 Pipette Tip Dimensions

| | BT-250 thin | | | A (Prior Art) | | |
|---|---|---|---|---|---|---|
| | ID | wall | OD | ID | wall | OD |
| Proximal End | 5.384 (0.212) | 0.737 (0.029) | 6.585 (0.270) | 5.384 (0.212) | 0.737 (0.029) | 6.585 (0.27) |
| 2.54 (0.1) | 4.496 (0.177) | 0.356 (0.014) | 5.182 (0.204) | 4.496 (0.177) | 0.610 (0.024) | 5.715 (0.225) |
| 5.08 (0.2) | 4.166 (0.164) | 0.483 (0.019) | 5.106 (0.201) | 4.166 (0.164) | 0.737 (0.029) | 5.639 (0.222) |
| 7.62 (0.3) | 4.166 (0.164) | 0.432 (0.017) | 5.029 (0.198) | 4.166 (0.164) | 0.7112 (0.028) | 5.563 (0.219) |
| 10.16 (0.4) | 4.115 (0.162) | 0.381 (0.015) | 4.750 (0.187) | 4.115 (0.162) | 0.584 (0.023) | 5.2832 (0.208) |
| 12.7 (0.5) | 4.039 (0.159) | 0.305 (0.012) | 4.648 (0.183) | 4.039 (0.159) | 0.584 (0.023) | 5.182 (0.204) |
| 15.24 (0.6) | 3.962 (0.156) | 0.305 (0.012) | 4.572 (0.180) | 3.962 (0.156) | 0.584 (0.023) | 5.105 (0.201) |
| 17.78 (0.7) | 3.861 (0.152) | 0.305 (0.012) | 4.470 (0.176) | 3.861 (0.152) | 0.584 (0.023) | 5.00 (0.197) |
| 20.32 (0.8) | 3.785 (0.149) | 0.305 (0.012) | 4.394 (0.173) | 3.785 (0.149) | 0.584 (0.023) | 4.928 (0.194) |
| 22.86 (0.9) | 3.708 (0.146) | 0.305 (0.012) | 4.318 (0.170) | 3.708 (0.146) | 0.584 (0.023) | 4.851 (0.191) |
| 25.4 (1) | 3.200 (0.126) | 0.305 (0.012) | 3.835 (0.151) | 3.200 (0.126) | 0.559 (0.022) | 4.343 (0.171) |
| 27.94 (1.1) | 2.311 (0.091) | 0.330 (0.013) | 2.997 (0.118) | 2.311 (0.091) | 0.559 (0.022) | 3.429 (0.135) |
| 30.48 (1.2) | 1.956 (0.077) | 0.356 (0.014) | 2.667 (0.105) | 1.956 (0.077) | 0.559 (0.022) | 3.074 (0.121) |
| 33.02 (1.3) | 1.753 (0.069) | 0.356 (0.014) | 2.438 (0.096) | 1.753 (0.069) | 0.559 (0.022) | 2.870 (0.113) |
| 35.56 (1.4) | 1.524 (0.06) | 0.356 (0.014) | 2.235 (0.088) | 1.524 (0.06) | 0.559 (0.022) | 2.642 (0.104) |
| 38.1 (1.5) | 1.321 (0.052) | 0.356 (0.014) | 2.032 (0.080) | 1.321 (0.052) | 0.559 (0.022) | 2.413 (0.095) |
| 40.64 (1.6) | 1.168 (0.046) | 0.330 (0.013) | 1.829 (0.072) | 1.168 (0.046) | 0.506 (0.02) | 2.210 (0.087) |
| 43.18 (1.7) | 1.041 (0.041) | 0.279 (0.011) | 1.626 (0.064) | 1.041 (0.041) | 0.457 (0.018) | 1.981 (0.078) |
| 45.72 (1.8) | 0.914 (0.036) | 0.254 (0.010) | 1.422 (0.056) | 0.914 (0.036) | 0.406 (0.016) | 1.753 (0.069) |
| 48.26 (1.9) | 0.787 (0.031) | 0229 (0.009) | 1.245 (0.049) | 0.787 (0.031) | 0.330 (0.013) | 1.448 (0.057) |
| 50.8 (2) | 0.660 (0.026) | 0.203 (0.008) | 1.067 (0.042) | 0.660 (0.026) | 0.229 (0.009) | 1.143 (0.045) |
| Distal End | 0.635 (0.025) | 0.203 (0.008) | 1.016 (0.040) | 0.635 (0.025) | 0.229 (0.009) | 1.067 (0.042) |

As seen with reference to **Table 2,** the BT-250 thin (Version 2) experimental embodiment has a maximum measured wall thickness of 0.737 mm (0.029 inches) (at the proximal end), and a wall thickness of less than 0.559 mm (0.022 inches) (e.g., less than 0.508 mm (0.02 inches)) at distances of 10.16 mm (0.4 inches) and greater from the proximal end, i.e., a wall thickness of less than 0.559 mm (0.022 inches) over the entire distal body region. The disclosed pipette tip has a wall thickness at the distal end of less than 0.229 (0.009 inches), e.g., in embodiments, less than 0.203, 0.152, 0.127 or 0.102 mm (0.008, 0.006, 0.005 or 0.004 inches). In embodiments, the pipette tip has a wall thickness of from 0.508 to 0.762 mm (0.02 to 0.03) over the proximal body region.

In embodiments, a wall thickness at a distance of about 12.7 mm (0.5 inches) from the proximal end is from about 0.381 to about 0.508 mm (about 0.015 to about 0.020 inches), a wall thickness at a distance of about 25.4 mm (about 1.0 inch) from the proximal end is from about 0.381 to about 0.508 mm (about 0.015 to about 0.020 inches), and a wall thickness at a distance of about 38.1 mm (about 1.5 inch) from the proximal end is from about 0.381 to about 0.508 mm (about 0.015 to about 0.020 inches).

Comparative data related to the manufacture of each of the conventional and improved design are summarized in **Table 3.** The data show that a 13% increase in injection pressure is associated with the thinner pipette tip, which is within machine limits, while the filling time and cooling time are reduced by 8.5% and 9.2% respectively, resulting in a total cycle time reduction per part of about 18%.

In embodiments, the pipette tip is an injection molded monolith of a single polymer or a blend of polymers (e.g., polypropylene), and has a total weight of less than 0.28 g, e.g., 0.15, 0.2 or 0.25 g, including ranges between any of the foregoing.

In embodiments, the melt flow index of the polymer(s), measured according to ASTM D1238, is between 10 and 100 g/10 min, e.g., 10, 20, 30, 40, 50, 60, 70, 80, 90 and 100 g/10 min, including ranges between any of the foregoing.

**Table 3.** Moldability data

|  | Max Injection Pressure (kPa((psi)) | Filling Time (s) | Time to Reach Ejection Temp (s) | Part Weight (g) |
|---|---|---|---|---|
| BT-250 | 91418 (13259) | 0.1698 | 3.26 | 0.2833 |
| BT-250 thin (ver. 2) | 103201 (14968) | 0.1555 | 2.93 | 0.1709 |
| Change | +13% | -8.5% | -9.2% | -40% |

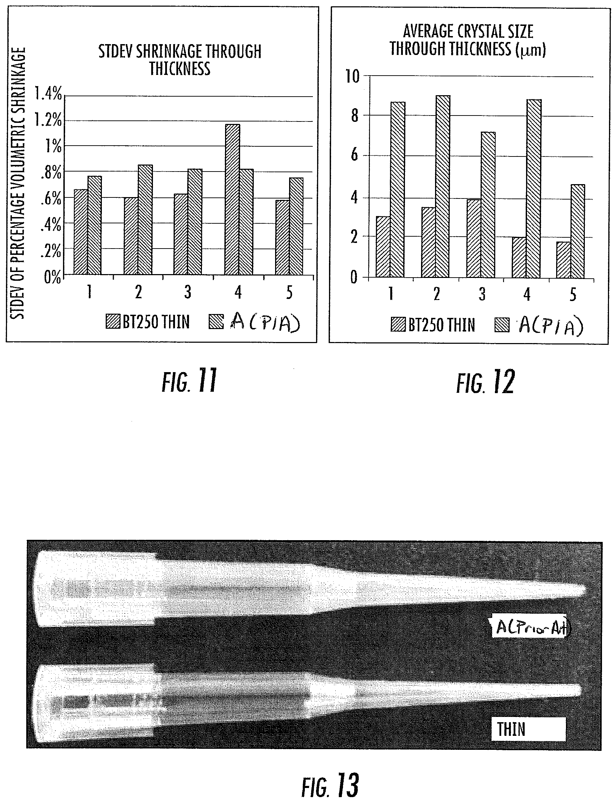

The decrease in cooling time associated with the revised (thinner walled) design results is less volumetric shrinkage, which contributes to better straightness and less warping in the final product. Data in **Fig. 11** show the standard deviation in the volumetric shrinkage through the thickness of the pipette tip outer wall at various locations (1-5) for the BT-240 (thin) experimental tip and the A (Prior Art - designated as "A P/A" in **Fig. 11** and **Fig. 12**). With respect to the A (Prior Art) pipette tip, less variation in the shrinkage was observed in four out of five of the locations tested. As seen with reference to **Fig. 12,** faster cooling times also result in a smaller average crystal size. In embodiments, the average crystal size in the disclosed pipette tip is less than 6 microns, e.g., 1, 2, 3, 4 or 5 microns, including ranges between any two of the foregoing. This results in a part with higher optical clarity, as illustrated in **Fig. 13.**

Dispense volume accuracy and precision for BT-250 and BT-250 thin tips were evaluated and compared to Beckman 250 and MBP250 tips for 10 microliter and 180 microliter dispense volumes. The results, which are shown in **Table 4,** reveal that the dispense volume precision for the BT-250 thin tips is comparable to the dispense volume precision of the other tips while the dispense volume accuracy for the BT-250 thin tips is markedly improved. Tips represented in Table 3 include two prior art tips, B (Prior Art) is a 250 µl pipette tip available from Beckman Coulter, Brea, CA, and M (Prior Art) is a 250 µl pipette tip available from Molecular Bio Products available from ThermoFisher, Waltham MA.

In embodiments, the pipette tip dispense volume accuracy is less than 0.5%, e.g., 0.3, 0.4 or 0.5%, including ranges between the foregoing, and the dispense volume precision is less than 2%, e.g., 0.5, 0.75, 1, 1.25, 1.5, 1.75 or 2%, including ranges between the foregoing.

Table 4. Dispense volume accuracy and precision

|  | Accuracy | | Precision | |
|---|---|---|---|---|
| Tip | 10 µL | 180 µL | 10 µL | 180 µL |
| BT-250 thin | 0.43% | 0.36% | 1.35% | 0.75% |
| A (Prior Art) | 0.93% | 0.89% | 1.76% | 0.70% |
| B (Prior Art) | 1.02% | 0.66% | 1.41% | 0.84% |
| M (Prior Art) | 0.74% | 1.65% | 2.28% | 0.94% |

Liquid retention for A (Prior Art) and BT-250 thin tips was evaluated and compared. In the evaluation, the initial tip mass was recorded. A glycerol, food color, water solution was drawn into each tip to its capacity and then dispensed. The final tip mass (including any residual solution) was recorded. The results (8 repeats) are summarized in **Table 5** together with the average retained mass.

**Table 5.** Maximum liquid recovery

| A (Prior Art) | | | BT-250 thin | | |
|---|---|---|---|---|---|
| Initial (g) | Final (g) | Liquid retained (g) | Initial (g) | Final (g) | Liquid retained (g) |
| 0.3003 | 0.3006 | 0.0003 | 0.1868 | 0.1868 | 0.0000 |
| 0.2985 | 0.2990 | 0.0005 | 0.1859 | 0.1859 | 0.0000 |
| 0.2984 | 0.2985 | 0.0001 | 0.1850 | 0.1850 | 0.0000 |

(continued)

| A (Prior Art) | | | BT-250 thin | | |
|---|---|---|---|---|---|
| Initial (g) | Final (g) | Liquid retained (g) | Initial (g) | Final (g) | Liquid retained (g) |
| 0.2994 | 0.2999 | 0.0005 | 0.1864 | 0.1865 | 0.0001 |
| 0.3003 | 0.3008 | 0.0005 | 0.1852 | 0.1852 | 0.0000 |
| 0.2994 | 0.2999 | 0.0005 | 0.1833 | 0.1833 | 0.0000 |
| 0.2977 | 0.2985 | 0.0008 | 0.1837 | 0.1838 | 0.0001 |
| 0.3005 | 0.3007 | 0.0002 | 0.1826 | 0.1826 | 0.0000 |
| | | 0.0004 | | | 0.0000 |

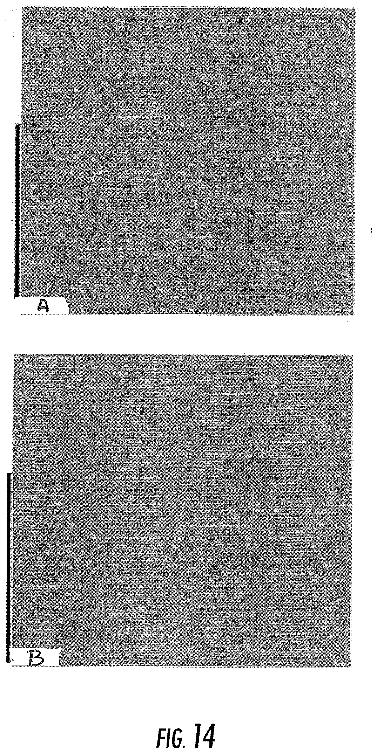

**Fig. 14** provides SEM images of the interior tip surface of the BT250 (thin) tips (shown in **Fig. 14A**) and the A (Prior Art) tips (which are shown **Fig. 14 B**) (scale bar = 100 micrometers). The inner wall of the BT250 (thin) (Version 2) tip has a noticeably smoother surface than the inner wall of the A (Prior Art) tips.

Without wishing to be bound by theory, it is believed that improvements in dispense volume accuracy and precision are attributable to one or more of a relatively low interior surface roughness within the distal body region of the pipette tip, and a relatively high interior surface roughness within the proximal body region. A relatively high interior surface roughness within the proximal body region may result in an effective seal between the pipette tip and a mandrel inserted therein.

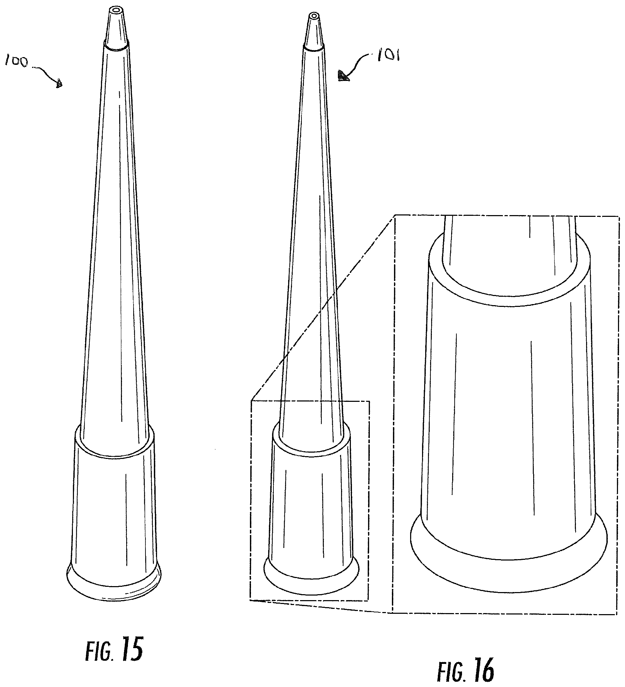

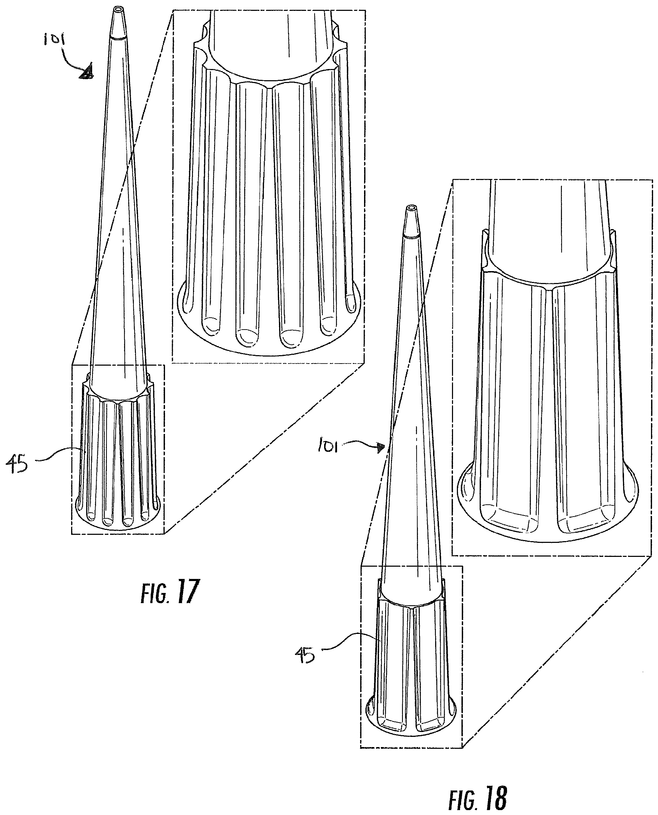

Schematic illustrations of ZT-200 pipette tips according to various embodiments are shown in **Figs. 15-18. Fig. 15** is a prior art ZT-200 tip **100,** identified throughout this disclosure as A200 (Prior Art). **Fig. 16** is an experimental thinned version (identified in Table 1 as ZT-200 or ZT-200 (thin) **101. Fig. 17** is an illustration of a ZT-200 or ZT-200 (thin) pipette tip **101** with ribs or fins **45,** according to embodiments. **Fig. 18** is a thin ZT-200 tip **100** with ribs or fins **45** according to further embodiments.

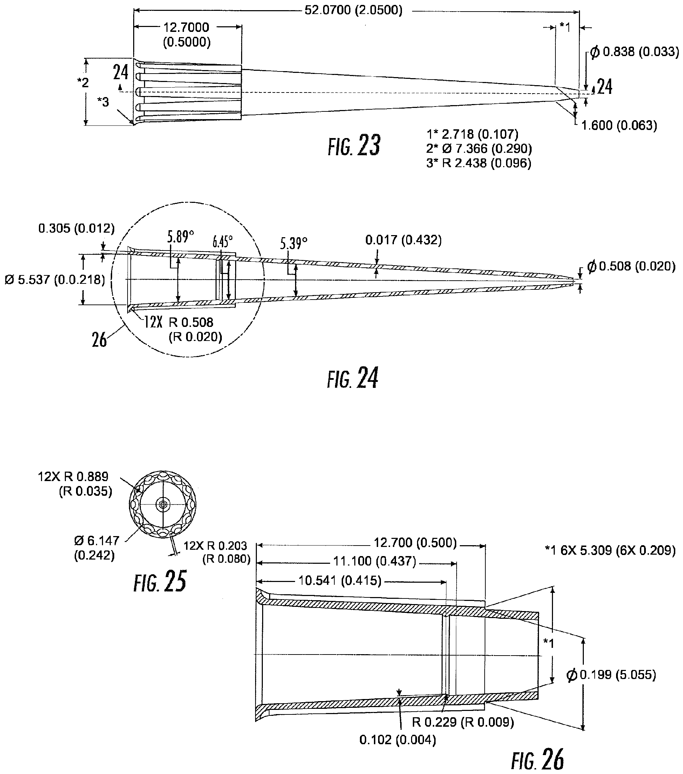

Engineering drawings for the thin ZT-200 tip of **Fig. 16** are shown in **Figs. 19-22.** Engineering drawings for the thin, ribbed ZT-200 tip of **Fig. 17** are shown in **Figs. 23-26.**

For the ZT-200 designs, resin utilization is decreased by as much as 31% relative to prior art pipette tips such as A200 (Prior Art). Compared to the A200 (Prior Art) tip (**Fig. 15**), embodiments of the experimental un-ribbed tip (**Figs. 16** and **19-22**) uses 15% less material. Embodiments of a pipette tip with 12 ribs (**Figs. 17** and **23-26**) uses 24% less material, and the embodiments of a pipette tip with 6 ribs (**Fig. 18**) uses 31% less material. The reduction in material provided by incorporating ribs or fins 45 may be incorporated into BT-250 pipette tip embodiments or ZT200 pipette tip embodiments, or other reduced or thinned pipette tip embodiments.

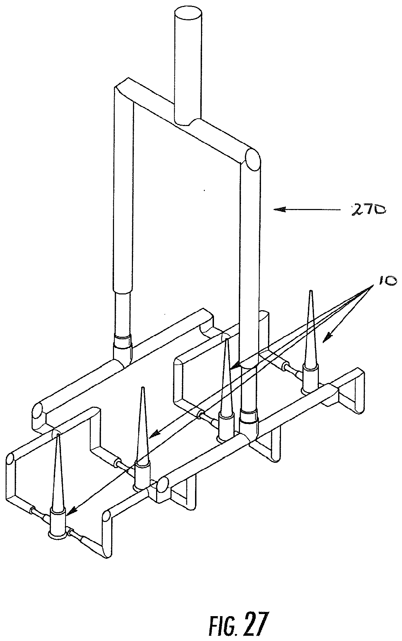

**Fig. 27** is a schematic illustration of a hot runner system for manufacturing thin-walled pipette tips, according to embodiments of the invention. **Fig. 27** shows a hot runner system **270** providing resin to pipette tips.

Summarized in **Table 6** for different tip designs is the maximum pressure drop over the molded part during injection molding. Although the pressure drop for the referenced tips increases as material usage decreases, the total pressure drop is within machine tolerances. In embodiments, the pressure drop may range from about 24132 kPa (3500 psi) to 48263 kPa (7000 psi). The mold temperature may range from about 35°C to 50°C.

**Table 6.** Pressure at V/P Switchover

| Tip | Material savings | Pressure drop [kPa] ([psi]) | Core shift [in] |
|---|---|---|---|
| ZT-200 thin | 15% | 27345 (3966) | 0.0000998 |
| ZT-200 thin & ribbed (12) | 24% | 30089 (4364) | 0.0000557 |
| ZT-200 thin & ribbed (6) | 31% | 31585 (4581) | 0.0000822 |
| BT-250 thin (Version 2) | 40% | 45574 (6610) | 0.0002 |

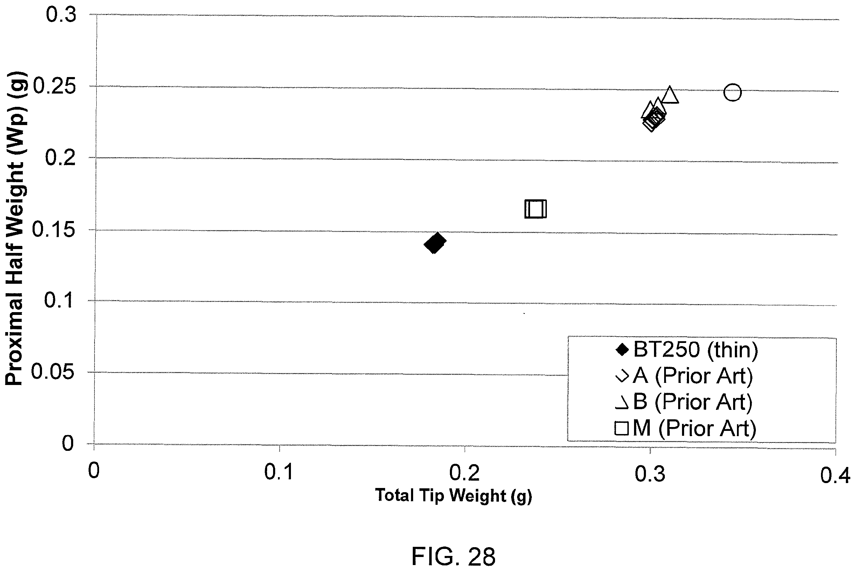

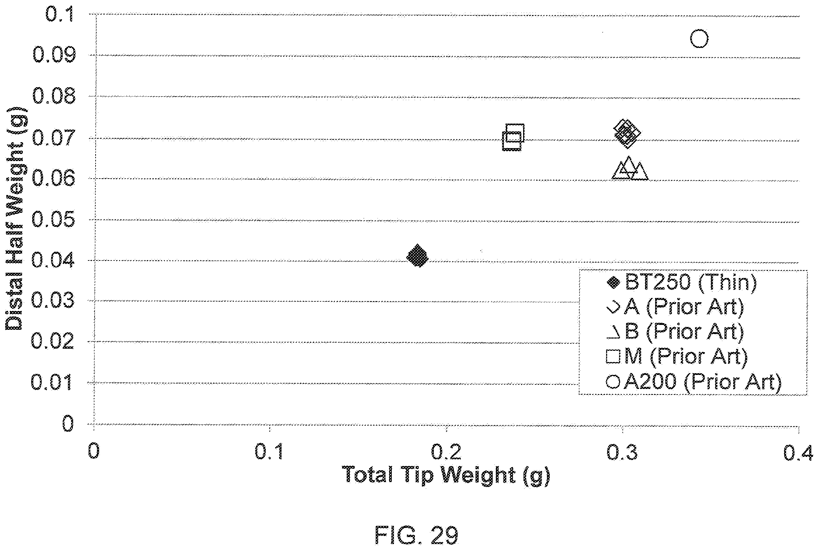

Summarized in **Table 7** are measurements of tip weight taken from experimental tip BT250, and three prior art examples of pipette tips. Measurements were made of the total weight of the tip Wt, the weight of the proximal half of the tip (L/2)p, as shown in **Fig. 2,** the weight of the distal half of the tip (L/2)d, also shown in **Fig. 2.** As discussed above, the experimental tips were thinned throughout the tip, but were thinned at the distal end more than has been shown in the prior art. It was surprisingly shown that, by thinning the distal end, or in other words by reducing the weight of the distal end (Wd) of the pipette, in relation to the weight of the proximal end (Wp), a attributes can be achieved without sacrificing tip straightness, resistance to bend failures, and rigidity of the resulting tip. **Fig. 28** is a graph illustrating the proximal half weight of tips compared to the total weight of the tips (Wt) for an experimental tip (BT250 (thin)) and four Prior Art tips. A200 is a 200 μl tip available from Axygen, Inc., Union City, CA. **Fig. 29** is a graph illustrating the distal half weight of tips compared to the total weight of the tips (Wt) for an experimental tip (BT 250 (thin)) and four Prior Art tips.

The ratio of the weight of the proximal end (Wp) of the pipette, in relation to the weight of the distal end (Wd), can be normalized to the total weight of each pipette tip (Wt) to define a thinning constant (T) according to Formula 1:

$$\text{Formula 1:} \quad \left\{ \frac{\left[ \dfrac{Wp}{Wd} \right]}{Wt} \right\} = T$$

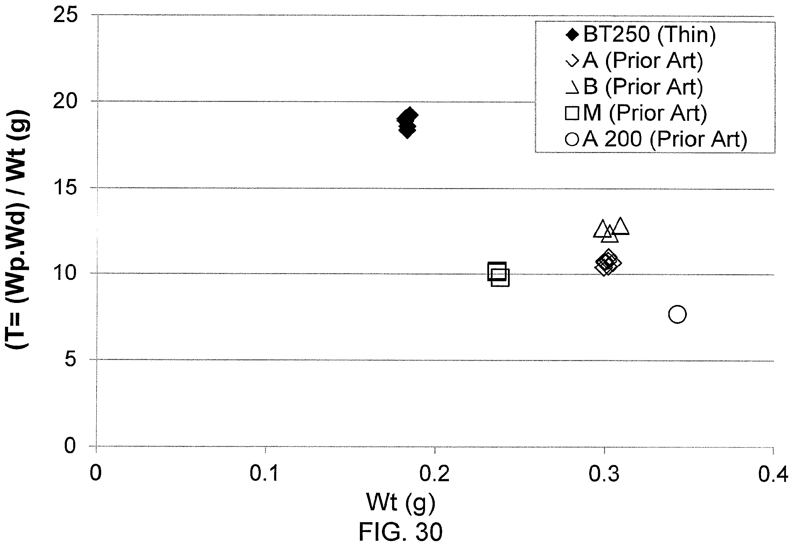

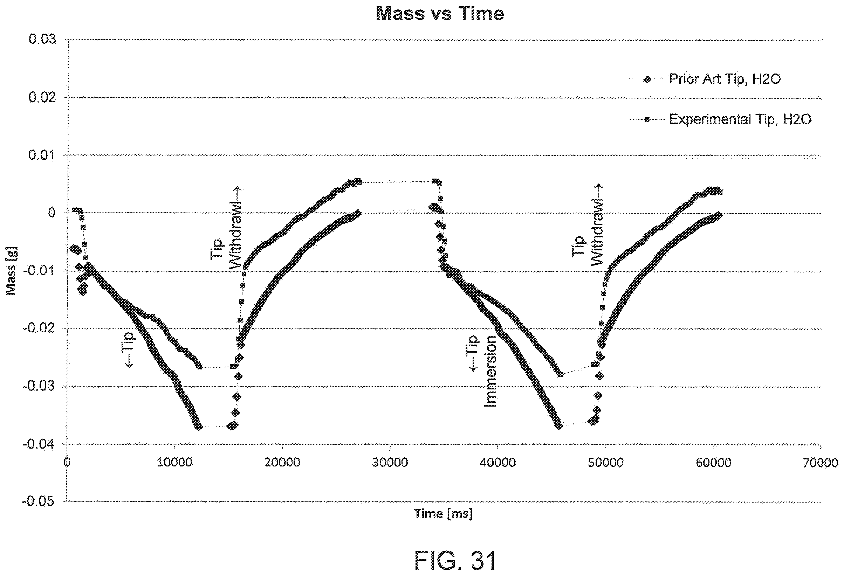

**Table 6** shows measured Wd, Wp, Wt and calculated ratios of Wp:Wd, and calculated thinning constant T. **Fig. 30** is a graph which plots thinning constant T against the total weight (Wt) of the illustrated pipette tips. As can be seen in **Fig. 31,** the experimental tip, BT 250, shows a thinning constant T that is greater than those shown for prior art pipette tips. For example, Thinning constant T can be greater than or equal to 15, greater than or equal to 16, greater than or equal to 17, or greater than or equal to 18.

**Table 6**

| Tip type | Vol (uL) | Wt (g) | Wd (g) | Wp (g) | Wp/Wd | (Wp/Wd)/Wt (T) | L (mm) ((in)) | L/2 (mm) ((in)) |
|---|---|---|---|---|---|---|---|---|
| BT 250 | 250 | 0.18 | 0.04 | 0.14 | 3.41 | 18.71 | 51.82 (2.04) | 25.91 (1.02) |
| A (Prior Art) | 250 | 0.3 | 0.07 | 0.23 | 3.17 | 10.56 | 51.56 (2.03) | 25.781 (1.015) |
| B (Prior Art) | 250 | 0.3 | 0.065 | 0.24 | 3.66 | 12.09 | 51.3715 (2.0225) | 25.65 (1.01) |
| M (Prior Art) | 250 | 0.25 | 0.07 | 0.18 | 2.7 | 10.54 | 51.56 (2.03) | 51.151 (2.015) |
| A200 (Prior Art) | 200 | 0.32 | 0.08 | 0.23 | 2.77 | 8.9 | 51.943 (2.045) | 25.989 (1.022) |

**Fig. 32** shows the interaction of the experimental tip BT 250, compared to a prior art tip (A (Prior Art), available from Axygen, Inc., Union City, CA). The Mass vs Time measurements, taken as the tips were immersed into water and withdrawn from water show that, as the tips are immersed in water, the prior art tip (closed diamond) has more hydrophobic characteristics than the experimental tip (closed square). Water is repelled from the tips as they are immersed into water. As the tips are withdrawn from water, the experimental tip appears to retain water, as shown by the increased mass measurement compared to the prior art tip as the tips are withdrawn from water.

**Table 7** reports the measured melt peak (in degrees Celcius) and the measured area under the melt curve (J/g) as measured by Differential Scanning Calorimetry (DSC). Melt Peak is a measurement that corresponds to the crystallinity of the polymer in the experimental and prior art pipette tips. BT250 and A (Prior Art) samples are manufactured from the same polymer resin. Melt Peak is a measure of the point at which crystallinity sites are broken down and the polymer melts. As shown in the Melt Peak measurements, the crystallinity of the polymer is the same for the BT250 and the A (Prior Art) tips. This indicates that the geometry of the two tips does not affect the crystallinity of the pipette tips. The Area under the Melt Peak Curve is a measurement of how much energy has to be put into the system in order to trigger the phase change of the melting polymer. The B (Prior Art) tip is made from a different polymer, having a different Melt Peak, compared to the BT250 tip and the A (Prior Art) tip. As can be seen in the differences in the measurement between the experimental BT250 (Thin) tip and the A(Prior Art) tip, the differences in geometry between the BT250 experimental tip and the A(Prior Art) tip changes the degree of crystallinity of the tip. The thinned tip has a higher degree of crystallinity (i.e. more energy has to be put in to have a phase change) compared to the prior art tip made from the same polymer material.

**Table 7**

| Sample ID | Melt Peak (°C) | Area Under Melt Peak Curve (J/g) |
|---|---|---|
| BT 250 (Thin) | 162.9 | 104.5 |
| A (Prior Art) | 162.8 | 91.92 |
| B (Prior Art) | 143.9 | 58.49 |

Without being limited by theory, this difference in the crystallinity of the polymer may be a result of the molding conditions, the temperature of the molds and the polymer during the manufacturing process, or the thinness of the part itself. In addition, this difference in the crystallinity of the polymer may affect the surface roughness, the orientation of crystals, and may affect the surface tension or the hydrophilicity/hydrophobicity of the tips. Again, without being limited by theory, this difference in crystallinity may explain the wetting behavior shown in **FIG. 31.**

Disclosed herein are methods for designing and making pipette tips, together with the resulting pipette tips. In embodiments, the pipette tips have handling and metering dimensions that are compatible with existing infrastructure. As used herein, the singular forms "a," "an" and "the" include plural referents unless the context clearly dictates otherwise. Thus, for example, reference to a "pipette tip" includes examples having two or more such "pipette tips" unless the context clearly indicates otherwise.

Disclosed herein is a pipette tip comprising a total weight (Wt) in grams and a length L of between 4.445 cm (1.75 inches) and 6.096 cm (1.24 inches) comprising a proximal half (L/2)p and a distal half (L/2)d; wherein the proximal half (L/2)p has a weight Wp in grams and the distal half (L/2)d has a weight Wd in grams; and wherein thinning constant T [g$^{-1}$], defined by Formula 1, is equal to or greater than 15, or greater than or equal to 18.

$$\text{Formula 1:} \qquad \left\{ \frac{\left[\dfrac{Wp}{Wd}\right]}{Wt} \right\} = T$$

In addition, the disclosure provides the pipette tip described in paragraph [0098] wherein the distal half (L/2)d has a wall having a thickness of less than 0.5588 mm (0.022 inches); wherein the distal half (L/2)d wall thickness does not exceed 0.7366 mm (0.029 inches); wherein the distal half (L/2)d wall thickness is less than 0.2286 mm (0.009 inches); wherein the distal half (L/2)d wall thickness is less than 0.127 mm (0.005 inches); or wherein the wherein the proximal half (L/2)p has a wall having a thickness of 0.508 to 0.762 mm (0.02 to 0.03 inches).

In additional embodiments, the disclosure provides the pipette tip of paragraphs [0098] or [0099] wherein the pipette tip injection molded from a single polymer or a blend of polymers; wherein the average crystal size of the polymer or polymers is less than 6 microns.

In additional embodiments, the disclosure provides the pipette tip of any one of paragraphs [0098], [0099] or [0100], wherein the proximal half (L/2)p further comprising a plurality of radial fins or wherein the plurality of radial fins have a circumferential thickness of less than 0.762 mm (0.03 inches).

In additional embodiments, the disclosure provides of any one of paragraphs [0098], [0099] [0100] or [0101] having a tip straightness differential length of less than 0.254 mm (0.001 inches), wherein the distal half (L/2)d has an outer diameter of less than 5.08 mm (0.2 inches) or wherein the pipette tip has a total weight of less than 0.28 g.

Further, the disclosure provides a method of making the pipette tip of any one of paragraphs [0098], [0099] [0100], [0101] or [0102], comprising: injecting a polymer or a mixture of polymers into a single or multiple cavity mold, or wherein the injected polymer is polypropylene

Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred. Any recited single or multiple feature or aspect in any one claim can be combined or permuted with any other recited feature or aspect in any other claim or claims.

It is also noted that recitations herein refer to a component being "configured" or "adapted to" function in a particular way. In this respect, such a component is "configured" or "adapted to" embody a particular property, or function in a particular manner, where such recitations are structural recitations as opposed to recitations of intended use. More specifically, the references herein to the manner in which a component is "configured" or "adapted to" denotes an existing physical condition of the component and, as such, is to be taken as a definite recitation of the structural characteristics of the component.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a pipette tip comprising polypropylene include embodiments where a pipette tip consists of polypropylene and embodiments where a pipette tip consists essentially of polypropylene.

**Claims**

1. A pipette tip comprising:

   a total weight (Wt) in grams and a length L of between 4.445 cm (1.75 inches) and 6.096 cm (2.4 inches) comprising a proximal half (L/2)p and a distal half (L/2)d;
   wherein the proximal half (L/2)p has a weight Wp in grams and the distal half (L/2)d has a weight Wd in grams; and wherein thinning constant T [g$^{-1}$], defined by Formula 1, is equal to or greater than 15.

$$\text{Formula 1:} \quad \frac{\left\{ \dfrac{\left[ \dfrac{Wp}{Wd} \right]}{} \right\}}{Wt} = T$$

2. The pipette tip of claim 1 wherein the thinning constant T [g$^{-1}$] is equal to or greater than 18.

3. The pipette tip of claim 1 or claim 2 wherein the length L is between 4.445 cm (1.75 inches) and 5.715 cm (2.25 inches).

4. The pipette tip of any one of claims 1-3 wherein the distal half (L/2)d has a wall having a thickness of less than 0.5588 mm (0.022 inches).

5. The pipette tip of any one of claims 1-3, wherein the distal half (L/2)d wall thickness does not exceed 0.7366 mm (0.029 inches).

6. The pipette tip of any one of claims 1-3, wherein the distal half (L/2)d wall thickness is less than 0.2286 mm (0.009 inches).

7. The pipette tip of any one of claims 1-3, wherein the distal half (L/2)d wall thickness is less than 0.2032 mm (0.008 inches).

8. The pipette tip of any one of claims 1-3, wherein the wherein the proximal half (L/2)p has a wall having a thickness of 0.508 to 0.762 mm (0.02 to 0.03 inches).

9. The pipette tip of any one of claims 1-8 wherein the pipette tip is injection molded from a single polymer or a blend of polymers.

10. The pipette tip of claim 9, wherein the average crystal size of the polymer or polymers is less than 6 microns.

**11.** The pipette tip of any one of claims 1-10, wherein the proximal half (L/2)p further comprises a plurality of radial fins.

**12.** The pipette tip of claim 1, having a total weight of less than 0.28 g.

**13.** A method of making the pipette tip of any one of claims 1-12 comprising:
injecting a polymer or a mixture of polymers into a single or multiple cavity mold.

**14.** The method of claim 13, wherein the injected polymer is polypropylene.

**Patentansprüche**

**1.** Pipettenspitze, die Folgendes umfasst:

ein Gesamtgewicht (Gg) in Gramm und eine Länge L von zwischen 4,445 cm (1,75 Zoll) und 6,096 cm (2,4 Zoll), die eine proximale Hälfte (L/2)p und eine distale Hälfte (L/2)d umfasst;
wobei die proximale Hälfte (L/2)p ein Gewicht Gp in Gramm aufweist und die distale Hälfte (L/2)d ein Gewicht Gd in Gramm aufweist;
und wobei eine Verdünnungskonstante T [g$^{-1}$], die durch Formel 1 definiert ist, gleich 15 oder größer ist.

$$\text{Formel 1:} \quad \frac{\left\{\dfrac{\left[\dfrac{Gp}{Gd}\right]}{}\right\}}{Gg} = T$$

**2.** Pipettenspitze nach Anspruch 1, wobei die Verdünnungskonstante T [g$^{-1}$] gleich 18 oder größer ist.

**3.** Pipettenspitze nach Anspruch 1 oder Anspruch 2, wobei die Länge L zwischen 4,445 cm (1,75 Zoll) und 5,715 cm (2,25 Zoll) beträgt.

**4.** Pipettenspitze nach einem der Ansprüche 1-3, wobei die distale Hälfte (L/2)d eine Wand aufweist, die eine Dicke von weniger als 0,5588 mm (0,022 Zoll) aufweist.

**5.** Pipettenspitze nach einem der Ansprüche 1-3, wobei die Dicke der Wand der distalen Hälfte (L/2)d 0,7366 mm (0,029 Zoll) nicht überschreitet.

**6.** Pipettenspitze nach einem der Ansprüche 1-3, wobei die Dicke der Wand der distalen Hälfte (L/2)d geringer als 0,2286 mm (0,009 Zoll) ist.

**7.** Pipettenspitze nach einem der Ansprüche 1-3, wobei die Dicke der Wand der distalen Hälfte (L/2)d geringer als 0,2032 mm (0,008 Zoll) ist.

**8.** Pipettenspitze nach einem der Ansprüche 1 - 3, wobei die proximale Hälfte (L/2)p eine Wand aufweist, die eine Dicke von 0,508 bis 0,762 mm (0,02 bis 0,03 Zoll) aufweist.

**9.** Pipettenspitze nach einem der Ansprüche 1-8, wobei die Pipettenspitze aus einem Einzelpolymer oder einem Gemisch von Polymeren spritzgegossen ist.

**10.** Pipettenspitze nach Anspruch 9, wobei die durchschnittliche Kristallgröße des Polymers oder der Polymere geringer als 6 Mikrometer ist.

**11.** Pipettenspitze nach einem der Ansprüche 1-10, wobei die proximale Hälfte (L/2)p ferner eine Vielzahl von radialen Rippen umfasst.

**12.** Pipettenspitze nach Anspruch 1, die ein Gesamtgewicht von weniger als 0,28 g aufweist.

**13.** Verfahren zur Herstellung der Pipettenspitze nach einem der Ansprüche 1-12, das Folgendes umfasst:
Einspritzen eines Polymers oder einer Mischung von Polymeren in eine Gussform mit einem oder mehreren Hohlräumen.

**14.** Verfahren nach Anspruch 13, wobei das eingespritzte Polymer Polypropylen ist.


**Revendications**

**1.** Embout de pipette comprenant :

un poids total (Wt) en grammes et une longueur L comprise entre 4,445 cm (1,75 pouce) et 6,096 cm (2,4 pouces) comprenant une moitié proximale (L/2)p et une moitié distale (L/2)d ;
dans lequel la moitié proximale (L/2)p a un poids Wp en grammes et la moitié distale (L/2)d a un poids Wd en grammes ;
et dans lequel la constante d'amincissement T [g$^{-1}$], définie par la Formula 1, est égale ou supérieure à 15.

$$\text{Formule 1:} \quad \frac{\left\{ \dfrac{Wp}{Wd} \right\}}{Wt} = T$$

**2.** Embout de pipette selon la revendication 1 dans lequel la constante d'amincissement T [g$^{-1}$] est égale ou supérieure à 18.

**3.** Embout de pipette selon la revendication 1 ou la revendication 2, dans lequel la longueur L est comprise entre 4,445 cm (1,75 pouce) et 5,715 cm (2,25 pouces).

**4.** Embout de pipette selon l'une quelconque des revendications 1-3, dans lequel la moitié distale (L/2)d a une paroi ayant une épaisseur inférieure à 0,5588 mm (0,022 pouce).

**5.** Embout de pipette selon l'une quelconque des revendications 1-3, dans lequel l'épaisseur de paroi de la moitié distale (L/2)d ne dépasse pas 0,7366 mm (0,029 pouce).

**6.** Embout de pipette selon l'une quelconque des revendications 1-3, dans lequel l'épaisseur de paroi de la moitié distale (L/2)d est inférieure à 0,2286 mm (0,009 pouce).

**7.** Embout de pipette selon l'une quelconque des revendications 1-3, dans lequel l'épaisseur de paroi de la moitié distale (L/2)d est inférieure à 0,2032 mm (0,008 pouce).

**8.** Embout de pipette selon l'une quelconque des revendications 1 - 3, dans lequel la moitié proximale (L/2)p a une paroi ayant une épaisseur de 0,508 à 0,762 mm (0,02 à 0,03 pouce).

**9.** Embout de pipette selon l'une quelconque des revendications 1-8, l'embout de pipette étant moulé par injection à partir d'un polymère simple ou d'un mélange de polymères.

**10.** Embout de pipette selon la revendication 9, dans lequel la taille de cristal moyenne du polymère ou des polymères est inférieure à 6 microns.

**11.** Embout de pipette selon l'une quelconque des revendications 1-10, dans lequel la moitié proximale (L/2)p comprend en outre une pluralité d'ailettes radiales.

**12.** Embout de pipette selon la revendication 1, ayant un poids total inférieur à 0,28 g.

**13.** Procédé de fabrication d'un embout de pipette selon l'une quelconque des revendications 1-12, comprenant : l'injection d'un polymère ou d'un mélange de polymères dans un moule à cavité simple ou multiple.

**14.** Procédé selon la revendication 13, dans lequel le polymère injecté est le polypropylène.

10

20

22

17
140
15
40
135

27

35
130

30

25

*FIG. 1*

$\left(\frac{L}{2}\right)_P$

$\left(\frac{L}{2}\right)_d$

L

20

10

45

17

15

55

50

25

*FIG. 2*

FIG 3

FIG. 4

FIG.5

BT - 250 THIN

A

A

A 200

ZT - 200 THIN

FIG. 6

Ø 1.016 (0.040)

A

51.410 (2.024)

4.00°

45.060 (1.774)

Ø 1.448
(0.057)

4.70°

Ø 2.819
(0.111)

28.473 (1.121)                    18.92°

24.130 (0.950)

Ø 4.267
(0.168)

1.93°

9.779 (0.385)

1.397 (0.055)

0

A

Ø 6.858
(0.270)

FIG. 7

SECTION A-A

Ø 0.635 (0.025)

51.410 (2.024)

Ø 1.270
(0.050)

38.710 (1.524)

4.83°

Ø 2.134
(0.084)

28.473 (1.121)

24.130 (0.950)

Ø 3.658
(0.144)                    1.91°

Ø 4.039
(0.159)

12.700 (0.500)                    1.61°

8.128 (0.320)

4.750 (0.187)                    Ø 4.1529
(0.1635)
4.420 (0.174)

1.118 (0.044)

0                    0.44°

Ø 4.496
(0.177)        Ø 5.385        43.38°
(0.212)

FIG. 8

Ø 4.953
(0.195)

Ø 4.750
(0.187)

1.61°

10.160 (0.400)

9.271 (0.365)

8.382 (0.330)

3X R 0.457
(3X R 0.018)

3X 0.076
(3X 0.003)

NO DRAFT

Ø 4.1529 ± 0.0127
0.1635 ± 0.0005

0

Ø 5.207
(0.205)

FIG. 9

20

10.78°

0.660 (0.026)

TRUE R 0.152
(TRUE R 0.006)

Ø 4.953
(0.195)

Ø 5.207
(0.205)

C

C

FIG. 10

FIG. 11

FIG. 12

FIG. 13

A

B

FIG. 14

100

101

FIG. 15

FIG. 16

FIG. 17

FIG. 18

*1 1.2700 (0.500)
*2 Ø 6.6548 (0.2620)

1.2674 (0.0499)

R 2.4384 (R 0.0960)  Ø 5.334 (0.2100)

12.7000 (0.5000)  Ø 6.147 (0.2420)

48.9966 (1.9290)

52.0700 (2.0500)

Ø 1.9304 (0.0760)   16.00°   Ø 1.0668 (0.0420)

7.366 (0.2900)

20

0   *1   *2

20

5.37°

**FIG. 19**

10.5385 (0.4149)

11.0998 (0.4370)

3.6322 (0.1430)

6.45°

0   *1   *2

12.7000 (0.5000)

52.0700 (2.0500)

5.39°

Ø 0.5080 (0.0200)

*5   *6

5.89°   *3   *4

Ø 5.4991 (0.2165)

Ø 4.3942 (0.1730)   Ø 4.2129 (0.1659)

1* R 0.3180 (R 0.0150)
2* R 0.2388 (R 0.0094)
3* 0.3937 (0.0155)
4* Ø 4.2418 (0.1670)
5* Ø 6.2611 (0.2465)
6* Ø 5.4991 (0.2165)

**FIG. 20**

26.4160±0.25
(1.040±0.01)

**FIG. 21**

11.176±0.25 (0.440±0.01)
FILTER DEPTH

**FIG. 22**

52.0700 (2.0500)

12.7000
(0.5000)

*1

∅ 0.838 (0.033)

24

24

*2

*3

1.600 (0.063)

FIG. 23

1* 2.718 (0.107)
2* ∅ 7.366 (0.290)
3* R 2.438 (0.096)

0.305 (0.012)

5.89°    6.45°    5.39°    0.017 (0.432)

∅ 5.537 (0.0.218)

∅ 0.508 (0.020)

26    12X R 0.508
(R 0.020)

FIG. 24

12X R 0.889
(R 0.035)

∅ 6.147
(0.242)

12X R 0.203
(R 0.080)

FIG. 25

12.700 (0.500)

11.100 (0.437)

10.541 (0.415)

*1 6X 5.309 (6X 0.209)

*1

∅ 0.199 (5.055)

R 0.229 (R 0.009)

0.102 (0.004)

FIG. 26

270

10

FIG. 27

FIG. 28

EP 3 183 061 B1

FIG. 29

FIG. 30

FIG. 31

EP 3 183 061 B1

**EP 3 183 061 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2172218 A
- US 2011183433 A1
- WO 2013170538 A1